# FASCICULE DE BREVET EUROPEEN

(11) **EP 1 916 631 B1**
(45) Date de publication et mention de la délivrance du brevet: **27.07.2011**
(21) Numéro de dépôt: 07119123.3
(22) Date de dépôt: 23.10.2007
(51) Int. Cl.: G07D 7/00, G07F 7/08, G07F 7/10, G07F 17/42, H04L 9/32

(54) **Procédé de lutte contre le vol de billets, billet, dispositif d'inactivation et dispositif d'activation correspondants**
Verfahren zum Schutz gegen Diebstahl von Geldscheinen, Geldschein sowie entsprechende Inaktivierungsvorrichtung und Aktivierungsvorrichtung
Method of fighting ticket theft, corresponding ticket, deactivation device and activation device

(30) Priorité: 25.10.2006 FR 0609390
(43) Date de publication de la demande: 30.04.2008
(73) Titulaire: Compagnie Industrielle et Financiere d'Ingenierie Ingenico, 92200 Neuilly sur Seine (FR)
(72) Inventeur: Naccache, David, 75018 Paris (FR)
(74) Mandataire: Bioret, Ludovic

(56) Documents cités:
- WO-A-2006/092626
- US-B1- 6 547 151
- GILDAS AVOINE: "Privacy issues in RFID banknote protection schemes" [Online] 27 août 2004 (2004-08-27), KLUWER , TOULOUSE, FRANCE , XP002432154 Extrait de l'Internet: URL:http://pmlab.iecs.fcu.edu.tw/PP/Papers /RF/Avoi04.pdf> * alinéa [02.2] - alinéa [02.3] *
- WEIS STEPHEN A: "Security and privacy aspects of low cost radio frequency identification systems" [Online] 2003, , BOPPARD (DE) , XP002464612 Extrait de l'Internet: URL:http://www.eicar.org/taskforces/rfid/i nfomaterial/SecurPrivAspectsRFID.pdf> [extrait le 2008-01-15] * alinéa [0002] - alinéa [0005] * * figure 3 *
- JUELS, RIVEST, SZYDLO: "The blocker tag : selective blocking of RFID tags for consumer privacy." [Online] octobre 2003 (2003-10), CONFERENCE ON COMPUTER AND COMMUNICATIONS SECURITY ACM PRESS , WASHINGTON DC, USA , XP002432174 Extrait de l'Internet: URL:http://www.rsa.com/rsalabs/staff/bios/ ajuels/publications/blocker/blocker.pdf> * alinéa [0001] * * alinéa [01.5] * * alinéa [0003] - alinéa [0004] *

## Description

### 1. Domaine de l'invention

Le domaine de l'invention est celui de la lutte contre le vol de billets.

Plus particulièrement, l'invention s'applique à la sécurisation des transports de billets (billets de banque, billets de concert, etc) mettant en oeuvre des étiquettes électroniques, ou radio-étiquettes.

### 2. Art antérieur

### 2.1 Lutte contre le vol

Il existe plusieurs techniques de sécurisation du transport de billets, notamment pour les billets de banque.

Actuellement, les transports de billets de banque se font par l'intermédiaire de compagnies de transports de fonds et nécessitent une mise en oeuvre très coûteuse, et induisent des risques importants pour les employés de ces compagnies chargés d'assurer la sécurité de ces transports.

Cependant, il arrive fréquemment que ces transports de fonds subissent des braquages, parfois violents, et en tout état de cause financièrement préjudiciables (pour le commerçant, le banquier et le transporteur de fonds).

Différentes solutions, en plus de la sécurisation des transporteurs (blindage, armement ...), ont été proposées, telles que l'utilisation de valises spéciales déposant une encre indélébile sur les billets. Cependant, cette approche est coûteuse, et destructrice.

Les mêmes problèmes existent, parfois à des échelles moindres, pour d'autres types de billets, tels que ceux destinés à des spectacles ou à des événements sportifs.

### 2.1 Lutte contre la contrefaçon

Par ailleurs, pour assurer la sécurisation des billets, on prévoit que ces billets eux-mêmes comportent des marques permettant de les authentifier et permettant de limiter ou d'empêcher leur contrefaçon.

De manière générale, les techniques de marquage des billets sont très évoluées et mises à jour régulièrement en fonction des progrès techniques dans le domaine, avec l'utilisation par exemple de numéros de série, de filigranes, d'hologrammes, de bandes magnétiques, etc.

Concernant les billets de banque, plusieurs études sont en cours pour les équiper d'un système de radio-identification dans le marquage des billets.

Ce système, communément appelé RFID (pour « Radio Frequency Identification » en anglais), se compose de marqueurs, ou radio-étiquettes, elles-mêmes composées d'une puce et d'une antenne, la puce n'étant pas alimentée et exploitant l'énergie d'un signal reçu pour restituer un signal de réponse, et de récepteurs ou lecteurs.

Dans une de ces études, notamment entreprise par la Banque Européenne pour améliorer la sécurisation des billets en Euros, il est ainsi proposé d'intégrer des radio-étiquettes aux billets de banque, comme un marquage supplémentaire, permettant ensuite de localiser des billets volés ou de détecter des billets contrefaits.

Le document GILDAS AVOINE.:"Privacy issues in RFID banknote protection schemes" [Online] 27 août 2004 (2004-8-27), KLUWER, TOULOUSE, France, décrit notamment l'utilisation de radio-étiquettes de type RFID pour équiper des billets de banque, dans des systèmes de protection de tels billets de banque.

Le document WEIS STEPHEN A :"Security and privacy aspects of low cost radio frequency identification systems" [Online] 2003, BOPPARD (DE) présente quant à lui une technique d'activation/désactivation de puces RFID, par exemple intégrées dans des billets de banque.

Ces entraves à la reproduction frauduleuse sont bien sûr essentielles, pour éviter la diffusion de fausses monnaies. Elles permettent de lutter contre les faux-monnayeurs, mais renforcent malheureusement l'intérêt, pour les personnes mal intentionnées, du vol de vrais billets, notamment pendant leur transport ou leur stockage.

### 3. Objectifs de l'invention

L'invention a notamment pour objectif de pallier ces inconvénients de l'art antérieur.

Plus précisément, un objectif de l'invention est de fournir une technique permettant de lutter contre le vol de billets, notamment lors de leur transport ou de leur stockage, de façon efficace et fiable.

Un autre objectif de l'invention est de fournir une telle technique de lutte contre le vol de billets, qui soit relativement peu coûteuse et simple à mettre en oeuvre.

### 4. Exposé de l'invention

L'invention propose une solution nouvelle qui ne présente pas l'ensemble de ces inconvénients de l'art antérieur, sous la forme d'un procédé de lutte contre le vol de billets équipés d'un élément de contrôle d'authenticité de type radio-étiquette, apte à retourner une information d'authenticité, en réponse à une requête d'authentification émise par un dispositif de contrôle.

Selon l'invention, un tel procédé est défini par la revendication 1.

Ainsi, l'invention repose sur une approche nouvelle et inventive de la lutte contre le vol des billets, en les rendant invalides, ou inactifs, de façon temporaire, notamment pendant leur transport, par exemple entre un commerçant et un organisme bancaire. En effet, selon une caractéristique particulière de l'invention, ces billets sont rendus non réactifs, ou non authentifiables, par tout dispositif de contrôle de leur authenticité.

Le procédé selon l'invention est non destructif. Il permet bien sûr de rendre des billets à nouveau valides, afin d'être remis en circulation. Ainsi, une fois ces billets transportés et reçus par l'organisme bancaire par exemple, ils sont réactivés pour être de nouveau valides. On peut cependant prévoir un code spécifique supplémentaire, rendant le billet définitivement inactif.

Notamment, le procédé selon l'invention peut comprendre une étape de transmission sécurisée d'au moins un code d'activation ou d'au moins une information permettant de reconstruire ledit code d'activation, vers un dispositif d'activation.

Ainsi, pour permettre par exemple à l'organisme bancaire de réactiver des billets reçus pour les remettre en circulation, un dispositif de réactivation transmet un code, ou information, à chaque billet. Cette information peut comprendre notamment une ou plusieurs données correspondant au ou permettant de reconstruire le code d'activation.

Selon une caractéristique particulière de l'invention, ladite étape de transmission sécurisée peut être effectuée via Internet.

D'autres modes de transmission (réseau téléphonique, réseau dédié, support de données tel qu'un CD-ROM ou une clé USB,...) peuvent bien sûr être utilisés. Il est également possible que l'organisme bancaire à qui sont destinés les billets connaisse à l'avance les codes confiés au commerçant, ou dispose d'outils permettant de les reconstituer.

Selon un premier mode de réalisation avantageux, ledit au moins un code d'activation est délivré par ledit billet suite à la réception de ladite requête d'inactivation.

Ainsi, le billet fournit lui-même le code d'activation permettant de le réactiver ultérieurement. Ce code d'activation est préférentiellement unique et fonction de la requête d'inactivation, de façon que le billet n'accepte d'être réactivé que par ce code d'activation. Le billet peut disposer de ce code, par exemple stocké dès la mise en circulation du billet, ou bien le calculer, notamment en fonction de la requête d'inactivation.

Selon un second mode de réalisation avantageux de l'invention, qui peut le cas échéant être combiné avec le premier, ladite requête d'inactivation comprend au moins un code d'inactivation, destiné à être stocké par ledit billet à la réception de ladite requête d'inactivation. Ledit code d'activation est alors fonction dudit code d'inactivation.

Dans ce cas, le billet compare (selon un algorithme idoine), lors de la réactivation, le code d'activation en fonction du code d'inactivation stocké, reçu dans la requête d'inactivation.

En d'autres termes, selon les modes de réalisation, le code d'activation peut être fourni par le billet et/ou par le dispositif d'inactivation.

En particulier, lesdits codes d'inactivation et/ou d'activation peuvent être obtenus à l'aide d'un algorithme appartenant au groupe comprenant :
- des algorithmes de chiffrement ;
- des algorithmes de type MAC ;
- des algorithmes de hachage.

Par exemple, des algorithmes de type AES ("Advanced Encryption Standard"), DES ("Data Encryption Standard") ou HMAC-SHA ("keyed-Hash Message Authentication Code - Secure Hash Algorithm" peuvent être utilisés.

Préférentiellement, lesdits billets peuvent prendre au moins les deux états appartenant au groupe comprenant :
- un état actif, dans lequel un billet est apte à retourner une information d'authenticité, en réponse à une requête d'authentification ;
- un état inactif, dans lequel un billet ne retourne pas de réponse, suite à une requête d'authentification, ou délivre une réponse de non authenticité.

Ainsi, un billet dans l'état actif est en mesure de répondre correctement à une requête d'authentification, émise par exemple lors d'un achat par le terminal de paiement chargé de vérifier la validité des billets. Un billet dans l'état inactif n'est en revanche pas en mesure de répondre de manière correcte à requête d'authentification.

Par exemple, lors d'un contrôle d'authenticité d'un billet, un billet dans l'état inactif peut ne pas répondre, ou alors renvoyer une information de non authenticité ou de billet frauduleux, et être alors reconnu comme étant issu d'un vol pendant un transport de billets invalides.

On peut en outre prévoir, en présence d'un billet inactif, une étape de traçabilité, permettant de déterminer d'où provient (de quel vol) le billet concerné.

De plus, lorsque ledit billet équipé dudit élément de contrôle se trouve dans l'état actif, il est préférentiellement apte à répondre à au moins une requête appartenant au groupe comprenant :
- une requête d'authentification ;
- une requête d'inactivation.

Ainsi, classiquement, un billet dans l'état actif peut donc répondre de façon correcte à une requête d'authentification. Selon l'invention, il est en outre capable de recevoir et traiter une requête particulière d'inactivation.

En particulier, lorsque ledit billet équipé dudit élément de contrôle se trouve dans l'état actif et reçoit une requête d'inactivation, ledit procédé comprend avantageusement une étape d'inhibition, par ledit élément de contrôle, de l'aptitude à répondre à une requête d'authentification, entraînant le basculement dudit billet dans l'état inactif.

Ainsi, lorsque le billet, dans l'état actif, reçoit une requête d'inactivation, la radio-étiquette dont il est équipé se met dans un mode désactivé, dans lequel elle ne répondra pas à une requête d'authentification ou émettra une information de non-authenticité.

Lorsque ledit billet se trouve dans l'état inactif et reçoit une requête d'activation, comprenant au moins un code d'activation, le dispositif d'activation et/ou le billet met en oeuvre les étapes suivantes :
- vérification de la validité du code d'activation reçu en fonction du code d'activation délivré par ledit billet, et délivrance d'une information de validité, positive ou négative, de la réactivation ;
- basculement dudit billet dans l'état actif, si ladite information de validité est positive.

Ainsi, lorsque la radio-étiquette d'un billet dans l'état inactif reçoit une requête d'activation, elle met en oeuvre un mécanisme de vérification de la validité du code d'activation reçu, par exemple en fonction du code d'activation délivré par le billet. Cette vérification peut aussi consister en une combinaison du code d'activation reçu dans la requête d'activation, et du code d'inactivation stocké lors de l'étape d'inactivation, en fonction d'un algorithme prédéterminé.

Si la requête de réactivation est validée, alors la radio-étiquette du billet se met dans un mode réactivé, ou valide, permettant au billet d'être à nouveau utilisé.

Par contre, si la requête de réactivation n'est pas validée, par exemple parce que les codes d'activation reçu et délivré ne correspondent pas, alors la radio-étiquette du billet reste dans un mode désactivé, ou invalide. On peut prévoir un mécanisme de blocage permanent dans le mode désactivé (ou le passage dans un mode « définitivement inactif ») dans certaines conditions, et par exemple au-delà d'un nombre prédéterminé de tentatives de réactivation, ou au delà d'un laps de temps prédéterminé.

Un autre aspect de l'invention concerne les billets mis en oeuvre dans le procédé décrit ci-dessus. Un tel billet est défini par la revendication 9.

Encore un autre aspect de l'invention concerne un dispositif d'inactivation d'un élément de contrôle d'authenticité de type radio-étiquette équipant un billet tel que décrit précédemment, destiné à être mis en oeuvre par exemple chez un commerçant.

Selon l'invention, un tel dispositif d'inactivation est défini par la revendication 10.

Avantageusement, un tel dispositif d'inactivation comprend des moyens de transmission vers au moins un dispositif d'activation d'un code d'activation, apte à rendre le billet valide.

L'invention concerne également un dispositif d'activation d'un élément de contrôle d'authenticité de type radio-étiquette équipant un billet tel que décrit précédemment, pouvant par exemple mis en oeuvre par un organisme bancaire.

Selon l'invention, un tel dispositif d'activation est défini par la revendication 12.

Dans certains cas, des dispositifs d'inactivation et d'activation peuvent être prévus, regroupant les moyens des deux dispositifs décrits ci-dessus. Ces différents dispositifs peuvent en outre comprendre des moyens, connus en eux-mêmes, d'authentification de billets.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre un exemple de système mettant en oeuvre l'invention ;
- la figure 2 illustre un exemple des étapes du procédé de lutte contre le vol de billets selon un mode de réalisation particulier de l'invention ;
- la figure 3 présente un synoptique d'un procédé d'activation et d'inactivation de billets mis en oeuvre selon un mode de réalisation de l'invention ;
- la figure 4 présente, schématiquement, les moyens mis en oeuvre dans un billet selon l'invention ;
- la figure 5 présente un exemple des différents états que peut prendre un billet selon un mode de réalisation particulier de l'invention.

### 6. Description d'un mode de réalisation de l'invention

Le principe général de l'invention repose donc sur la mise en oeuvre d'un système de radio-identification sur des billets et de l'inactivation et la réactivation des radio-étiquettes.

Plus précisément, selon un mode de réalisation particulier de l'invention, un tel procédé permet de rendre inactif une radio-étiquette de façon à rendre un billet non réactif, ou non authentifiable par tout dispositif de contrôle de leur authenticité.

Par souci de simplification, on emploiera dans la suite de la description le terme billet, pour désigner le billet en lui-même et l'élément de contrôle, ou la radio-étiquette, dont il est équipé.

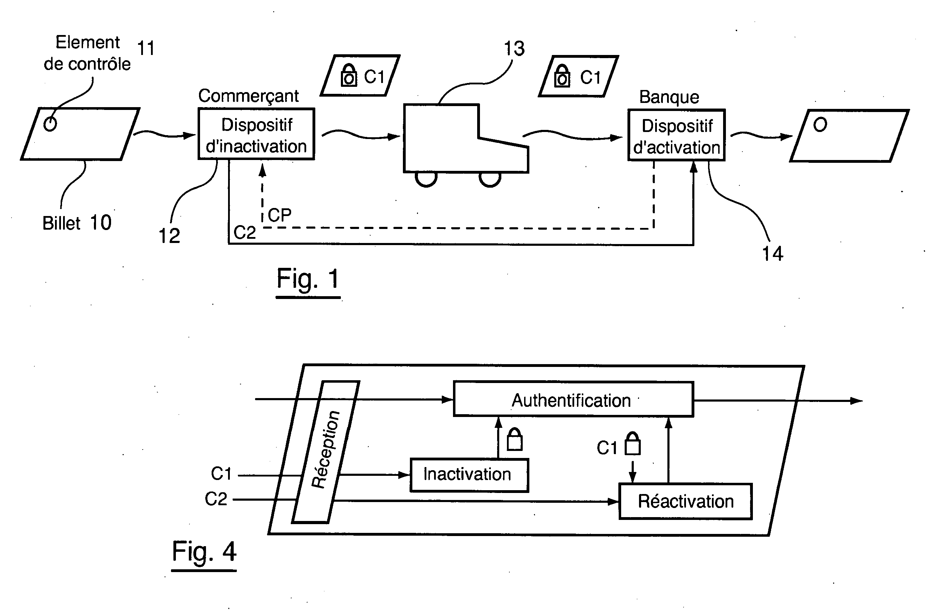

On présente maintenant en relation avec la figure 1 un exemple de système mettant en oeuvre un mode de réalisation de l'invention.

On considère un billet 10 utilisé pour une transaction. Ce billet est équipé, selon l'invention, d'un élément de contrôle 11, permettant notamment de contrôler son authenticité.

Un tel élément de contrôle 11, par exemple une radio-étiquette de type RFID, permet au billet de prendre plusieurs états, notamment en fonction de requêtes reçues en provenance de différents dispositifs.

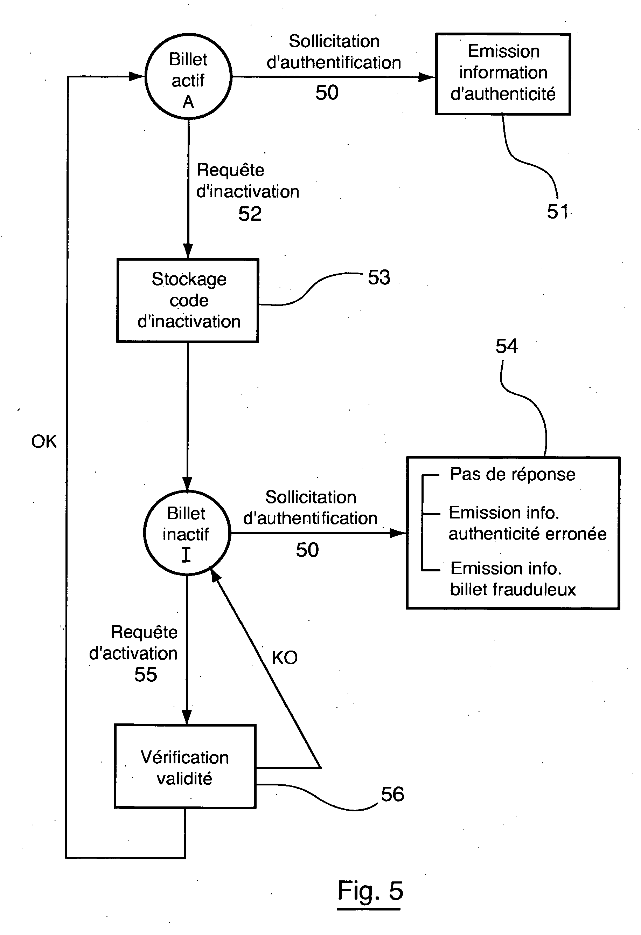

Les différents états d'un tel billet, ainsi que les requêtes qu'il peut recevoir et auxquelles il répond dans chaque état, sont illustrés plus précisément en figure 5, décrite plus bas.

Dans le mode de réalisation pris en exemple, un commerçant souhaite transférer de manière sécurisée des billets à sa banque et utilise pour cela un dispositif d'inactivation 12 de chaque billet.

Un tel dispositif selon ce mode de réalisation particulier de l'invention permet de verrouiller les capacités d'authentification du billet 10 en lui transmettant un code C1 d'inactivation. De façon imagée, cette inactivation du billet correspond à poser un cadenas sur le billet, ou plus précisément sur l'élément de contrôle du billet, et à transmettre, au dispositif 14 chargé de la réactivation du billet, une clé C2 permettant d'ouvrir le cadenas.

Dans la pratique, on peut notamment utiliser un algorithme tel que ceux utilisés pour le cryptage, comme par exemple des algorithmes de type AES ("Advanced Encryption Standard"), DES ("Data Encryption Standard") ou HMAC-SHA ("keyed-Hash Message Authentication Code - Secure Hash Algorithm".

Par exemple, l'inactivation et la réactivation du billet peuvent tenir compte d'un algorithme asymétrique, utilisant une clé publique et une clé privée. Ainsi, le code C1 d'inactivation, correspondant au « cadenas » posé sur le billet, peut tenir compte d'une clé publique CP envoyée par le dispositif 14 d'activation au dispositif 12 d'inactivation. Celui-ci transmet alors, au moment de l'inactivation du billet, une clé privée C2 au dispositif 14, telle qu'une fonction F(Cl, C2) permet de vérifier la validité de la réactivation du billet.

Selon un autre mode de réalisation particulier de l'invention, la requête d'inactivation ne comprend pas de code d'inactivation. Le billet, quand il reçoit cette requête, génère un code d'activation correspondant, qui sera nécessaire à sa réactivation ultérieure. Ce code, calculé par le billet en fonction de la requête d'inactivation, est transmis au dispositif émetteur de cette requête, et stocké dans le billet, pour valider ultérieurement une requête de réactivation. Ce code est ensuite transmis, par le dispositif d'inactivation, au dispositif d'activation, parallèlement au transport des billets inactivés.

Selon le mode de réalisation décrit en figure 1, le billet 10 ainsi rendu inactif est transporté par un organisme de transport de fonds 13 vers la banque (qui n'a plus besoin d'utiliser un fourgon blindé).

La banque reçoit donc un billet inactif, c'est à dire sur lequel a été posé un « cadenas » correspondant à un code d'inactivation C1. Pour rendre à nouveau le billet actif, le dispositif d'activation 14 de la banque émet alors une requête d'activation au billet, comprenant notamment un code C2, reçu de manière sécurisée en provenance du dispositif d'inactivation 12.

Le billet qui reçoit cette requête d'activation doit combiner les codes C1 et C2, c'est à dire voir si « la clé C2 permet bien d'ouvrir le cadenas C1 », pour valider la requête d'activation et ainsi se remettre dans l'état actif.

Si la requête est validée, le billet se retrouve donc dans un état où ses capacités d'authentification sont à nouveau actives.

Selon l'autre mode de réalisation particulier dans lequel seul un code d'activation est utilisé, généré par le billet au moment de la requête d'inactivation, le billet valide la requête d'activation en comparant le code d'activation qu'il a en mémoire et celui transmis avec la requête d'activation. Si ces deux codes correspondent, alors la requête est validée et le billet se retrouve dans l'état actif.

Ces deux exemples d'inactivation et d'activation de billet permettent de s'assurer que seul le détenteur du bon code d'activation peut réactiver un billet inactif. En effet, dans un cas comme dans l'autre, le billet ne valide la requête d'activation que s'il reconnaît le code d'activation qui correspond à la requête d'inactivation.

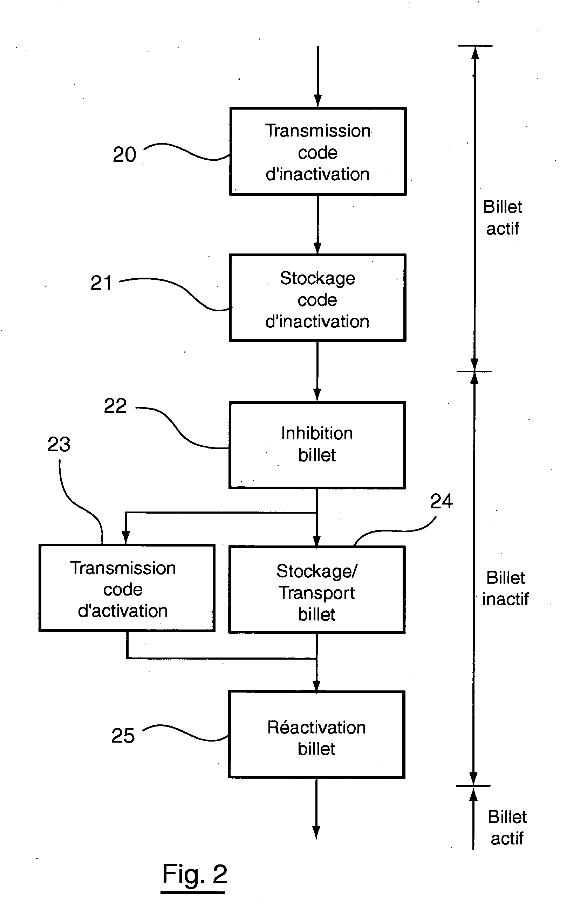

La figure 2 illustre un exemple des étapes du procédé selon un mode de réalisation particulier de l'invention, correspondant à l'exemple décrit en figure 1.

On considère une première étape 20 de transmission d'un code d'inactivation à un billet actif, étape pouvant par exemple être mise en oeuvre par un dispositif d'inactivation chez un commerçant.

Le procédé comprend ensuite une étape de stockage 21 du code d'inactivation par le billet, en vue d'une réactivation ultérieure.

Une fois ce code d'inactivation stocké, l'élément de contrôle du billet se met dans un mode désactivé lors d'un étape 22 d'inhibition et le billet est alors dans l'état inactif.

Le commerçant doit également transmettre à l'organisme bancaire destinataire du billet le code d'activation correspondant au billet invalidé, lors d'une étape 23 de transmission du code d'activation.

Pour ce faire, un mode de communication sécurisé est utilisé, par exemple via Internet.

En parallèle de la transmission du code d'activation, le billet inactif est transporté jusqu'à l'organisme bancaire, lors d'une étape de transport 24. Le transfert du billet dans ce cas ne nécessite pas de sécurité particulière, le billet transporté étant rendu non réactif à une requête d'authentification. En effet, un billet inactif volé lors de son transport, ne pourra pas répondre de manière correcte à une requête d'authentification et sera ainsi reconnu comme étant un billet volé.

Selon une variante de ce mode de réalisation, le procédé peut également être utilisé en vue de la sécurisation du stockage des billets. En effet, le commerçant peut avoir besoin d'invalider (ou « d'endormir ») des billets pour les stocker, par exemple le temps d'un week-end, et les réactiver ensuite pour les remettre en circulation. Dans ce cas, le commerçant peut utiliser des dispositifs d'inactivation et d'activation de billets, communiquant entre eux pour se transmettre les codes d'activation. L'activation et l'inactivation peuvent également être des fonctions d'un même dispositif, qui peut également assurer le mécanisme d'authentification.

Une fois le billet transféré à l'organisme bancaire, celui-ci peut le réactiver à l'aide du code d'activation reçu parallèlement. Pour ce faire, le procédé selon l'invention comprend une étape de réactivation de billet 25, mise en oeuvre par un dispositif d'activation. Celui-ci émet ensuite une requête d'activation spécifique, à destination du billet inactif, comprenant notamment le code d'activation reçu correspondant au billet désactivé.

Le billet, s'il reconnaît la validité du code d'activation, notamment grâce à une combinaison des deux codes d'inactivation et d'activation, va se mettre à nouveau dans un état actif.

Selon un autre mode de réalisation particulier, l'étape 20 correspond à la transmission d'une requête d'inactivation, sans code d'inactivation, et l'étape 21 correspond à la génération, par le billet, d'un code d'activation pour sa réactivation ultérieure. Les étapes suivantes, 22, 23 et 24, sont les mêmes, l'étape 25 de réactivation ne mettant pas en oeuvre une comparaison d'un code d'inactivation et d'un code d'activation, mais une comparaison entre le code d'activation stocké en 21 et celui transmis dans la requête de réactivation dans l'étape 25.

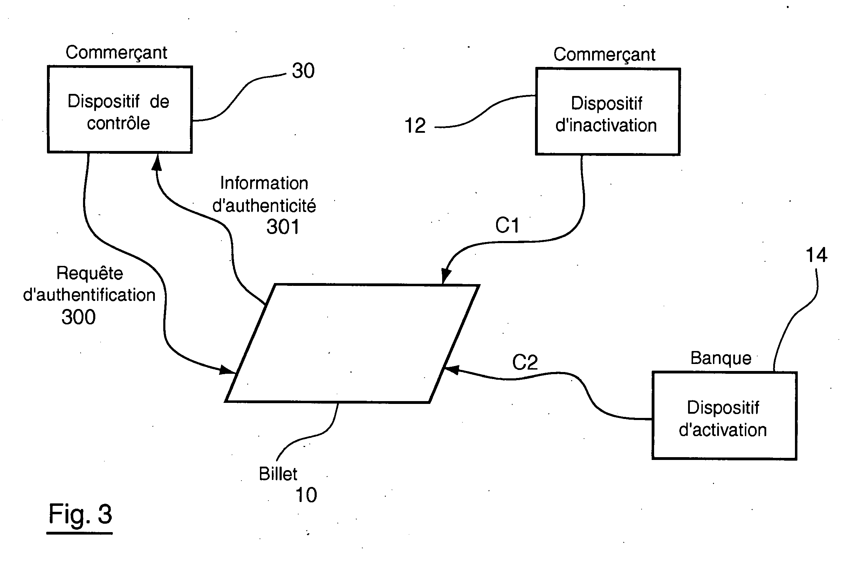

On présente maintenant, en relation avec la figure 3, un synoptique d'un procédé d'activation et d'inactivation de billets mis en oeuvre selon un mode de réalisation de l'invention.

On considère un billet 10 équipé d'un élément de contrôle selon l'invention. Un tel billet est apte à répondre à une requête d'authentification 300 émise par un dispositif de contrôle 30, par exemple un détecteur d'authentification chez un commerçant pour vérifier la validité d'un billet utilisé lors d'une transaction ou un détecteur d'authentification utilisé lors d'un contrôle d'un billet à l'entrée d'une manifestation sportive ou d'un spectacle par exemple.

Cette technique d'authentification est connue en soi, comme indiqué en préambule.

Le billet 10 émet une réponse à cette requête d'authentification 300, ou défi, sous la forme d'une information d'authenticité 301. Selon que le billet est dans l'état actif ou inactif, cette information 301 peut prendre différentes valeurs, telles qu'une information d'authenticité valide (dans l'état actif) ou une information d'authenticité invalide (dans l'état inactif). Dans le cas d'un billet inactif, celui-ci peut également ne pas émettre de réponse à une requête d'authentification.

Ce même billet est également apte à recevoir une requête d'inactivation comprenant notamment un code C1, émise par un dispositif d'inactivation 12, par exemple chez un commerçant souhaitant rendre inactifs des billets avant de les transmettre à une banque, ou pour les stocker de manière sécurisée.

Enfin, un tel billet peut être réactivé, lorsqu'il est dans l'état inactif, par un dispositif d'activation 14 lui transmettant une requête d'activation, comprenant un code C2 d'activation, correspondant au code C1 d'inactivation reçu par le billet précédemment.

Ce dispositif d'activation 14 peut être mis en oeuvre par exemple par un service central, pour la première émission du billet (qui peut également, par défaut, être dès l'origine dans l'état actif), puis par des entités bancaires, pour réactiver un billet.

Selon un autre mode de réalisation particulier, dans lequel seul un code d'activation est utilisé, le code C1 est remplacé par une requête d'inactivation sans code d'inactivation, et le code C2 est généré par le billet, transmis au dispositif d'activation au moment de la requête d'inactivation. Ensuite, ce dispositif transmet ce code C2 au dispositif de réactivation.

Bien sûr, des traitements des billets par lots peuvent être mis en oeuvre, à partir d'algorithmes adaptés.

On présente maintenant, de manière schématique, en relation avec la figure 4, les moyens mis en oeuvre dans un billet selon un mode de réalisation particulier de l'invention.

On considère un billet équipé d'un élément de contrôle lui permettant de recevoir et de répondre à différentes requêtes, parmi lesquelles des requêtes d'authentification, d'inactivation et d'activation.

Le billet dispose tout d'abord de moyens de réception des différentes requêtes puis de moyens distincts de réponse à ces différentes requêtes.

Les moyens de réponse à une requête d'authentification permettent au billet d'envoyer une information d'authenticité, quand il est dans l'état actif.

Le billet dispose également de moyens de gestion d'une requête d'inactivation, comprenant ou non un code C1 d'inactivation (correspondant à un cadenas) selon le mode de réalisation mis en oeuvre, permettant de verrouiller les moyens de réponse à une requête d'authentification.

Il dispose également de moyens pour stocker ce code C1 d'inactivation, en vue de la vérification ultérieure de la validité d'une requête d'activation.

Selon un autre mode de réalisation, le billet dispose de moyens pour générer un code d'activation et pour le stocker.

Le billet met également en oeuvre des moyens de gestion d'une requête de réactivation, comprenant notamment un code d'activation C2. De tels moyens de gestion comprennent notamment des moyens de validation de la requête, c'est à dire des moyens de combinaison du code d'inactivation C1 stocké, et du code d'activation C2 reçu. Ainsi, ces moyens de validation déterminent si « la clé C2 permet bien de déverrouiller le cadenas C1 ». Si tel est le cas, alors les moyens de gestion de la requête de réactivation prennent en compte cette requête et réactivent les moyens de réponse à une requête à une requête d'authentification. Sinon, les moyens de gestion de la requête de réactivation ne prennent pas en compte cette requête et le billet reste dans l'état inactif.

Selon un autre mode de réalisation, ces moyens de validation de la requête sont en fait des moyens de comparaison du code d'activation reçu dans cette requête et du code d'activation généré et stocké au moment de l'inactivation.

On présente désormais, en relation avec la figure 5, un exemple des différents états que peut prendre un billet selon un mode de réalisation particulier de l'invention, ainsi que les différentes requêtes qu'il peut recevoir et traiter.

On considère un billet dans l'état actif A, ou valide, pouvant recevoir au moins deux types de requêtes :
- une requête d'authentification 50 ;
- une requête d'inactivation 52.

Le billet peut également recevoir une requête d'activation, à laquelle il ne répondra pas car étant déjà dans l'état actif.

Dans le cas de la requête d'authentification 50, le billet étant actif, il émet en réponse une information d'authenticité 51, permettant au dispositif émetteur de la requête de valider l'utilisation du billet.

Dans le cas d'un requête d'inactivation 52, le billet stocke d'abord au moins un code d'inactivation, lors d'une étape 53 de stockage, en vue d'une réactivation ultérieure.

Dans une variante de ce mode de réalisation, le billet peut stocker des informations lui permettant de reconstruire ultérieurement le code d'inactivation, et de valider une requête d'activation.

Dans encore un autre mode de réalisation, le billet génère lui-même un code d'activation, qu'il stocke et qu'il émet, en réponse à la requête d'inactivation.

Une fois ce code, ou les informations lui permettant de reconstruire ce code, stockés, le billet inhibe ses capacités de réponse à une requête d'authentification, selon un mode d'inactivité prédéterminé, et se trouve alors dans l'état inactif I, ou invalide.

Ce mode d'inactivité prédéterminé définit la réponse 54 du billet à une requête d'authentification 50, pouvant prendre les formes suivantes :
- non réponse : le billet est « silencieux » et ne répond pas à une requête d'authentification ;
- réponse erronée : le billet émet une information d'authenticité erronée, ne correspondant à aucune réponse attendue ;
- réponse de non authenticité : le billet émet une information explicite de non authenticité ou de billet frauduleux.

Dans l'état inactif, le billet peut donc recevoir deux types de requête :
- une requête d'authentification 50 ;
- une requête d'activation 55.

Si le billet reçoit une requête d'inactivation, il n'y répondra pas, car étant déjà dans l'état inactif.

Les réponses possibles dans le cas d'une requête d'authentification 50 ont déjà été décrites ci-dessus, selon le mode d'inactivité prédéterminé, et sont connues de l'homme du métier.

Dans le cas d'une requête d'activation 55, le billet détermine d'abord la validité de la requête, lors d'une étape 56 de vérification de validité. Pour cela, il utilise le code d'inactivation, ou les informations lui permettant de reconstruire son code d'inactivation, stocké(es) lors de l'étape d'inactivation, et le compare au code d'activation reçu dans la requête de réactivation.

Dans un autre mode de réalisation, le billet utilise le code d'activation stocké précédemment, pour le comparer au code d'activation reçu dans la requête d'activation.

Si la requête est validée, alors le billet se retrouve dans l'état actif A, et retrouve ses capacités de réponse aux requêtes d'authentification et aux requêtes d'inactivation.

Si la requête n'est pas validée, parce que le code d'activation n'est pas reconnu par exemple, le billet reste dans l'état inactif I.

Dans le cas particulier d'une requête d'inactivation définitive, non présentée sur cette figure, le billet, quel que soit son état, inhibe toutes ses fonctions de réponse et devient silencieux quelle que soit la requête dont il peut faire l'objet.

## Revendications

1. Procédé de lutte contre le vol de billets équipés d'un élément de contrôle d'authenticité de type radio-étiquette, apte à retourner une information d'authenticité, en réponse à une requête d'authentification émise par un dispositif de contrôle,
comprenant une étape de transmission (20), par au moins un dispositif d'inactivation dudit élément de contrôle d'authenticité, audit élément de contrôle d'au moins une requête d'inactivation, rendant le billet invalide et une étape de stockage et/ou transport (24) dudit billet invalide,
**caractérisé en ce qu'**il comprend les étapes suivantes, préalablement à ladite étape de stockage et/ou transport (24) dudit billet invalide :
- délivrance par ledit billet d'au moins un code d'activation ;
- transmission sécurisée (23), par ledit dispositif d'inactivation, dudit au moins un code d'activation, vers un dispositif d'activation,
et, postérieurement à ladite étape de stockage et/ou transport (24) dudit billet invalide, une étape de réactivation (25) dudit élément de contrôle par ledit dispositif d'activation, à l'aide dudit au moins un code d'activation, rendant ledit billet valide.

2. Procédé de lutte contre le vol de billets selon la revendication 1, **caractérisé en ce que** ladite étape de transmission sécurisée est effectuée via Internet.

3. Procédé de lutte contre le vol de billets selon l'une quelconque des revendications 1 et 2, **caractérisé en ce que** ladite requête d'inactivation comprend au moins un code d'inactivation, stocké par ledit billet à la réception de ladite requête d'inactivation, et **en ce que** ledit code d'activation est fonction dudit code d'inactivation.

4. Procédé de lutte contre le vol de billets selon l'une quelconque des revendications 1 à 3, **caractérisé en ce que** lesdits codes d'activation et/ou d'inactivation sont obtenus à l'aide d'un algorithme appartenant au groupe comprenant :
- des algorithmes de chiffrement ;
- des algorithmes de type MAC ;
- des algorithmes de hachage.

5. Procédé de lutte contre le vol de billets selon l'une quelconque des revendications 1 à 4, **caractérisé en ce que** lesdits billets peuvent prendre au moins les deux états appartenant au groupe comprenant :
- un état actif, dans lequel un billet est apte à retourner une information d'authenticité, en réponse à une requête d'authentification ;
- un état inactif, dans lequel un billet ne retourne pas de réponse, suite à une requête d'authentification, ou délivre une réponse de non-authenticité.

6. Procédé de lutte contre le vol de billets selon la revendication 5, **caractérisé en ce que**, lorsque ledit billet se trouve dans l'état actif, il est apte à répondre à au moins une requête appartenant au groupe comprenant :
- une requête d'authentification ;
- une requête d'inactivation.

7. Procédé de lutte contre le vol de billets selon l'une quelconque des revendications 5 et 6, **caractérisé en ce que**, lorsque ledit billet équipé dudit élément de contrôle se trouve dans l'état actif et reçoit une requête d'inactivation, ledit procédé comprend une étape d'inhibition, par ledit élément de contrôle, de l'aptitude à répondre à une requête d'authentification, entraînant le basculement dudit billet dans l'état inactif.

8. Procédé de lutte contre le vol de billets selon l'une quelconque des revendications 5 et 6, **caractérisé en ce que**, lorsque ledit billet se trouve dans l'état inactif et reçoit une requête d'activation, comprenant au moins un code d'activation, il comprend les étapes suivantes :
- vérification de la validité du code d'activation reçu en fonction dudit code d'activation délivré par ledit billet et/ou dudit code d'inactivation, et délivrance d'une information de validité, positive ou négative, de la réactivation ;
- basculement dudit billet dans l'état actif, si ladite information de validité est positive.

9. Billet équipé d'un élément de contrôle d'authenticité de type radio-étiquette, apte à retourner une information d'authenticité, en réponse à une requête d'authentification émise par un dispositif de contrôle,
**caractérisé en ce que** ledit élément de contrôle comprend :
- des moyens d'inactivation, en réponse à une requête d'inactivation, rendant ledit billet invalide ;
- des moyens de délivrance d'au moins un code d'activation ;
- des moyens de réactivation, à l'aide dudit code d'activation délivré par ledit élément de contrôle dudit billet, rendant ledit billet valide.

10. Dispositif d'inactivation d'un élément de contrôle d'authenticité de type radio-étiquette équipant un billet selon la revendication 9,
**caractérisé en ce qu'**il comprend les moyens suivants :
- des moyens de transmission audit élément de contrôle d'au moins une requête d'inactivation, rendant le billet invalide ;
- des moyens de stockage d'au moins un code d'activation, délivré par ledit billet, en vue de la réactivation dudit élément de contrôle.

11. Dispositif d'inactivation selon la revendication 10, **caractérisé en ce qu'**il comprend des moyens de transmission vers au moins un dispositif d'activation d'un code d'activation, apte à rendre le billet valide.

12. Dispositif d'activation d'un élément de contrôle d'authenticité de type radio-étiquette équipant un billet selon la revendication 9,
**caractérisé en ce qu'**il comprend :
- des moyens de réception d'au moins un code d'activation, délivré par ledit billet ;
- des moyens de transmission audit élément de contrôle dudit au moins un code d'activation, apte à rendre le billet valide.

## Claims

1. Method for combating the theft of notes equipped with a radio-tag type element for checking authenticity of notes, which can return authenticity information in response to an authentication request emitted by a checking device,
comprising a step of transmission (20), by at least one device for deactivation of said element for checking of authenticity, to said checking element, of at least one deactivation request which makes the note invalid, and a step of storage and/or transport (24) of said invalid note,
**characterised in that** it comprises the following steps, prior to said step of storage and/or transport (24) of said invalid note:
- issuing by said note of at least one activation code;
- secure transmission (23), by said deactivation device, of said at least one activation code, to an activation device,
and, after said step of storage and/or transport (24) of said invalid note, a step of reactivation (25) of said checking element by said activation device, by means of said at least one activation code, thus making said note valid.

2. Method for combating the theft of notes according to claim 1, **characterised in that** said step of secure transmission is carried out via the Internet.

3. Method for combating the theft of notes according to either of claims 1 and 2, **characterised in that** said deactivation request comprises at least one deactivation code which is stored by said note upon receipt of said deactivation request, and **in that** said activation code is dependent on said deactivation code.

4. Method for combating the theft of notes according to any one of claims 1 to 3, **characterised in that** said activation and/or deactivation codes are obtained by means of an algorithm belonging to the group which comprises:
- encoding algorithms;
- algorithms of the MAC type;
- hash algorithms.

5. Method for combating the theft of notes according to any one of claims 1 to 4, **characterised in that** said notes can assume at least two states which belong to the group comprising:
- an active state, in which a note can return authenticity information in response to an authentication request;
- an inactive state, in which a note does not return a response further to an authentication request, or issues a response of non-authenticity.

6. Method for combating the theft of notes according to claim 5, **characterised in that**, when said note is in said active state, it can respond to at least one request belonging to the group which comprises:
- an authentication request;
- a deactivation request.

7. Method for combating the theft of notes according to either of claims 5 and 6, **characterised in that**, when said note equipped with said checking element is in said active state, and receives a deactivation request, said method comprises a step of inhibition, by said checking element, of the aptitude to respond to an authentication request, thus giving rise to switching of said note into said inactive state.

8. Method for combating the theft of notes according to either of claims 5 and 6, **characterised in that**, when said note is in said inactive state, and receives an activation request comprising at least one activation code, it comprises the following steps:
- verification of the validity of activation code received, in accordance with said activation code issued by said note and/or said deactivation code, and issuing of positive or negative validity information in relation to the reactivation;
- switching of said note into the active state, if said validity information is positive.

9. Note equipped with a radio-tag type element for checking of authenticity, which can return authenticity information in response to a request for authentication emitted by a checking device, **characterised in that** said checking element comprises:
- means for deactivation, in response to a deactivation request, thus rendering said note invalid;
- means for issuing at least one activation code;
- means for reactivation, by means of said activation code issued by said element for checking said note, thus making said note valid.

10. Device for deactivation of a radio-tag type element for checking of authenticity, which equips a note according to claim 9,
**characterised in that** it comprises the following means:
- means for transmission to said checking element of at least one deactivation request, thus making the note invalid;
- means for storage of at least one activation code issued by said note, for the purpose of reactivation of said checking element.

11. Deactivation device according to claim 10, **characterised in that** it comprises means for transmission to at least one device for activation of an activation code, which can make the note valid.

12. Device for activation of an element for checking of authenticity of the radio-tag type, which equips a note according to claim 9,
**characterised in that** it comprises:
- means for receipt of at least one activation code which is issued by said note;
- means for transmission to said checking element of said at least one activation code which can make the note valid.

## Patentansprüche

1. Verfahren zum Schutz vor Diebstahl von Scheinen, die mit einem Authentizitätskontrollelement des Typs Funketikett ausgestattet sind, das eine Authentizitätsinformation als Antwort auf eine Authentifikationsanfrage, die von einer Kontrollvorrichtung gesendet wird, zurücksenden kann,
umfassend einen Schritt des Übertragens (20) mindestens einer Inaktivierungsanfrage durch mindestens eine Inaktivierungsvorrichtung des Authentizitätskontrollelements an das Kontrollelement, die den Schein ungültig macht, und einen Schritt des Lagerns und/oder Transports (24) des ungültigen Scheins,
**dadurch gekennzeichnet, dass** es die folgenden Schritte vor dem Schritt des Lagerns und/oder Transports (24) des ungültigen Scheins aufweist:
- Liefern mindestens eines Aktivierungscodes durch den Schein;
- abgesicherte Übertragung (23) durch die Inaktivierungsvorrichtung des mindestens einen Aktivierungscodes zu der Aktivierungsvorrichtung,
und, nach dem Schritt des Lagerns und/oder Transports (24) des ungültigen Scheins, einen Schritt des Wiederaktivierens (25) des Kontrollelements durch die Aktivierungsvorrichtung mit Hilfe des mindestens einen Aktivierungscodes, der den Schein gültig macht.

2. Verfahren zum Schutz vor Diebstahl von Scheinen nach Anspruch 1, **dadurch gekennzeichnet, dass** der Schritt des abgesicherten Übertragens über das Internet erfolgt.

3. Verfahren zum Schutz vor Diebstahl von Scheinen nach einem der Ansprüche 1 und 2, **dadurch gekennzeichnet, dass** die Inaktivierungsanfrage mindestens einen Inaktivierungscode aufweist, der von dem Schein beim Empfangen der Inaktivierungsanfrage gespeichert wird, und dass der Aktivierungscode von dem Inaktivierungscode abhängt.

4. Verfahren zum Schutz dem Diebstahl von Scheinen nach einem der Ansprüche 1 bis 3, **dadurch gekennzeichnet, dass** die Aktivierungscodes und/oder Inaktivierungscode erhalten werden mit Hilfe eines Algorithmus aus der Gruppe umfassend:
- Chiffrierungsalgorithmen;
- Algorithmen des Typs MAC;
- Hash-Algorithmen.

5. Verfahren zum Schutz dem Diebstahl von Scheinen nach einem der Ansprüche 1 bis 4, **dadurch gekennzeichnet, dass** die Scheine mindestens zwei Zustände annehmen können, die zu folgender Gruppe gehören:
- ein aktiver Zustand, in dem ein Schein eine Authentizitätsinformation als Antwort auf eine Authentifikationsanfrage zurücksenden kann;
- ein inaktiver Zustand, in dem ein Schein im Anschluss an eine Authentifikationsanfrage keine Antwort zurücksendet oder eine Antwort der Nicht-Authentizität zurücksendet.

6. Verfahren zum Schutz vor Diebstahl von Scheinen nach Anspruch 5, **dadurch gekennzeichnet, dass** der Schein, wenn er sich in dem aktiven Zustand befindet, mindestens eine Anfrage beantworten kann, die zu folgender Gruppe gehört:
- eine Authentifikationsanfrage;
- eine Inaktivierungsanfrage.

7. Verfahren zum Schutz vor Diebstahl von Scheinen nach einem der Ansprüche 5 und 6, **dadurch gekennzeichnet, dass** das Verfahren, wenn sich der Schein, der mit dem Kontrollelement ausgestattet ist, in dem aktiven Zustand befindet und eine Inaktivierungsanfrage empfängt, einen Schritt des Inhibierens, durch das Kontrollelement, der Fähigkeit umfasst, eine Authentifikationsanfrage zu beantworten, die das Umschalten des Scheins auf den inaktiven Zustand nach sich zieht.

8. Verfahren zum Schutz vor Diebstahl von Scheinen nach einem der Ansprüche 5 und 6, **dadurch gekennzeichnet, dass** es, wenn sich der Schein in dem inaktiven Zustand befindet und eine Aktivierungsanfrage empfängt, die mindestens einen Aktivierungscodes enthält, die folgenden Schritte umfasst:
- Prüfen der Gültigkeit des empfangenen Aktivierungscodes in Abhängigkeit des von dem Schein gelieferten Aktivierungscodes und/oder Inaktivierungscodes, und Liefern einer positiven oder negativen Gültigkeitsinformation der Wiederaktivierung;
- Umschaltung des Scheins auf den aktiven Zustand, wenn die Gültigkeitsinformation positiv ist.

9. Schein, der mit einem Authentizitätskontrollelement des Typs Funketikett ausgestattet ist, der eine Authentizitätsinformation als Antwort auf eine Authentifikationsanfrage zurücksenden kann, die von einer Kontrollvorrichtung gesendet wird,
**dadurch gekennzeichnet, dass** das Kontrollelement umfasst:
- Mittel zum Inaktivieren, als Antwort auf eine Inaktivierungsanfrage, die den Schein ungültig machen;
- Mittel zum Liefern mindestens eines Aktivierungscodes;
- Mittel zum Wiederaktivieren mit Hilfe des von dem Kontrollelement des Scheins gelieferten Aktivierungscodes, der den Schein gültig macht.

10. Vorrichtung zum Inaktivieren eines Authentizitätskontrollelements des Typs Funketikett, das einen Schein nach Anspruch 9 ausstattet,
**dadurch gekennzeichnet, dass** sie die folgenden Mittel aufweist:
- Mittel zum Übertragen mindestens einer Inaktivierungsanfrage, die den Schein ungültig macht, an das Kontrollelement;
- Mittel zum Speichern mindestens eines Aktivierungscodes, der von dem Schein geliefert wird, um das Kontrollelement wieder zu aktivieren.

11. Vorrichtung zum Inaktivieren nach Anspruch 10, **dadurch gekennzeichnet, dass** sie Mittel zum Übertragen eines Aktivierungscodes, der den Schein gültig machen kann, zu mindestens einer Aktivierungsvorrichtung aufweist.

12. Vorrichtung zum Aktivieren eines Authentizitätskontrollelements des Typs Funketikett, das einen Schein nach Anspruch 9 ausstattet,
**dadurch gekennzeichnet, dass** sie Folgendes aufweist:
- Mittel zum Empfangen mindestens eines Aktivierungscodes, der von dem Schein geliefert wird;
- Mittel zum Übertragen des mindestens einen Aktivierungscodes, der den Schein gültig machen kann, zu dem Kontrollelement.
